# EUROPÄISCHE PATENTSCHRIFT

(11) **EP 2 743 519 B1**
(45) Veröffentlichungstag und Bekanntmachung des Hinweises auf die Patenterteilung: **19.07.2023**
(21) Anmeldenummer: 12008283.9
(22) Anmeldetag: 12.12.2012
(51) Int. Cl.: F15B 19/00, F16K 37/00, G01L 27/00

(54) **Ventilanordnung und Verfahren zum Kalibrieren einer Ventilanordnung**
Valve assembly and method for calibrating a valve assembly
Agencement de soupapes et procédé de calibrage d'un agencement de soupapes

(43) Veröffentlichungstag der Anmeldung: 18.06.2014
(73) Patentinhaber: Festo SE & Co. KG, 73734 Esslingen (DE)
(72) Erfinder: Maichl, Martin, 73084 Salach (DE); Meier, Martin, CH-3652 Hilterfingen (CH); Dickhoff, Andreas, 73230 Kirchheim (DE)
(74) Vertreter: Patentanwälte Magenbauer & Kollegen Partnerschaft mbB

(56) Entgegenhaltungen:
- EP-A2- 1 245 812
- EP-B1- 1 245 812
- DE-A1-102005 036 663
- US-A- 4 576 035
- US-A1- 2007 234 812
- US-A1- 2008 066 522

## Beschreibung

Die Erfindung betrifft eine Ventilanordnung mit mehreren Ventileinrichtungen, wobei jede Ventileinrichtung ein Ventilgehäuse aufweist, das einen Ventilraum begrenzt, in dem ein Ventilglied beweglich zwischen einer Sperrstellung und einer Freigabestellung aufgenommen ist, um einen freien Strömungsquerschnitt für ein Fluid in einem Strömungspfad zwischen einem in den Ventilraum einmündenden Eingangskanal und einem aus dem Ventilraum ausmündenden Ausgangskanal zu beeinflussen, und wobei jede der Ventileinrichtungen einen ersten Absolutdrucksensor zur Bereitstellung eines ersten Drucksignals in Abhängigkeit von einem Arbeitsdruck im Strömungspfad aufweist, wobei die Ventilanordnung ferner eine Auswerteschaltung zur Verarbeitung des ersten Drucksignals und einen zweiten Absolutdrucksensor umfasst, wobei der zweite Absolutdrucksensor außerhalb des Strömungspfads angeordnet ist und zur Bereitstellung eines zweiten Drucksignals in Abhängigkeit von einem Referenzdruck außerhalb des Strömungspfads ausgebildet ist und mit der Auswerteschaltung verbunden ist, um eine Ermittlung eines Differenzdrucks zwischen dem ersten und dem zweiten Drucksignal zu ermöglichen. Ferner betrifft die Erfindung ein Verfahren zum Kalibrieren einer derartigen Ventilanordnung.

Aus der DE 10 2005 036 663 A1 ist eine sogenannte Mechatronik bekannt, bei der in einem Gehäuse ein mechanischer Teil und ein elektronischer Teil angeordnet sind, wobei der mechanische Teil ein oder mehrere Magnetventile sowie Druckführungskanäle enthält und der elektronische Teil eine Platine mit elektronischen Bauteilen aufweist. In den Druckführungskanälen sind Sensormodule zur Messung physikalischer Größen eingebaut, wobei es sich bei den Sensormodulen je nach Bedarf um Absolutdrucksensoren oder Differenzdrucksensoren handeln kann.

Die US 4,576,035 offenbart ein Verfahren zur Kalibrierung eines Differenzmessverfahrens für eine physikalische Grösse, bei dem eine erste Erfassungsvorrichtung mit einem ersten Element gekoppelt wird, das eine erste variable physikalische Eigenschaft aufweist, um einen Betrag der ersten variablen physikalischen Eigenschaft zu erfassen; wobei dem ersten Element ein erstes Ventil und eine zweite Erfassungsvorrichtung zugeordnet wird, die dazu angepasst ist, den Betrag der ersten variablen physikalischen Eigenschaft zu erfassen, wenn das erste Ventil geöffnet ist, wobei die zweite Erfassungseinrichtung unabhängig von der ersten Erfassungsvorrichtung betreibbar ist; wobei zwischen die zweite Erfassungseinrichtung und ein zweites Element, das eine zweite variable physikalische Eigenschaft aufweist, ein zweites Ventil angeordnet ist und wobei die zweite Erfassungsvorrichtung dazu angepasst ist, den Betrag der zweiten variablen physikalischen Eigenschaft zu erfassen, wenn das zweiten Ventil geöffnet ist. Zunächst wird bei geöffnetem ersten Ventil und geschlossenen zweite Ventil mit Hilfe der ersten und zweiten Erfassungseinrichtung ein Fehlerwert ermittelt wird und anschließend bei geschlossenem ersten Ventil und geöffneten zweiten Ventil ein Differenzbetrag ermittelt wird, um anschließend der Fehlerbetrag vom Differenzbetrag abgezogen wird, um einen korrekten Meßwert zu erhalten.

Die EP 1245812 A2 offenbart eine Erfassungsvorrichtung zum Erfassen von Anomalien eines Drucksensors für einen Benzinmotor und einen Dieselmotor in einem frühen Stadium. Eine ECU prüft eine Differenz zwischen einem festgestellten Ansaugdruck eines Ansaugdrucksensors und einem festgestellten Ansaugdruck eines atmosphärischen Drucksensors vor dem Anlassen des Verbrennungsmotors. Wenn ein ermittelter Differenzwert größer ist als ein zulässiger Differenzwert, so bestimmt die ECU, dass eine Eigenschaft der Sensoren vom normalen Betrieb abweicht und unterbindet die Verwendung der erfassten Ansaugdrücke als Steuerparameter für den Motors, wobei dann ein Steuerparameter verwendet wird, der während des Betriebs des Motors ermittelt wurde.

Die Aufgabe der Erfindung besteht darin, eine aus mehreren Ventileinrichtungen aufgebaute Ventilanordnung sowie ein Verfahren zum Kalibrieren einer derartigen Ventilanordnung bereitzustellen, die für eine automatisierte Überprüfung der Funktionsweise der Absolutdrucksensoren ausgebildet sind.

Diese Aufgabe wird für eine Ventilanordnung der eingangs genannten Art mit den Merkmalen des Anspruchs 1 gelöst.

Hierdurch kann in jeder der Ventileinrichtungen individuell zumindest das erste Drucksignal mit Hilfe eines entsprechenden ersten Absolutdrucksensors ermittelt werden und mit dem zentralen zweiten Absolutdrucksensor abgeglichen werden. Dadurch ergibt sich eine kostengünstige Aufbauweise für eine entsprechend ausgerüstete Ventilanordnung.

Mit Hilfe des ermittelten Differenzdrucks können, gegebenenfalls unter Einbeziehung von Kenntnissen über eine Arbeitsstellung des Ventilglieds zwischen der Sperrstellung und der Freigabestellung, Informationen über die Druckverhältnisse im Strömungspfad sowie über die Funktion der beteiligten Absolutdrucksensoren, insbesondere des ersten Absolutdrucksensors, gewonnen werden. Diese Informationen ermöglichen eine Überprüfung der vom ersten Absolutdrucksensor bereitgestellten Drucksignale und somit eine automatische Überwachung des ersten Absolutdrucksensors, insbesondere in vorgebbaren Zeitabständen. Dies ist beispielsweise dann von Interesse, wenn hohe Sicherheitsanforderungen an die Ventilanordnung gestellt werden, die eine Überprüfung der Ventilfunktion beispielsweise anhand der Ermittlung von unterschiedlichen Arbeitsdrücken im Strömungspfad bei unterschiedlichen Arbeitsstellungen des Ventilglieds erfordern. Bei ausschließlicher Nutzung eines einzigen im Strömungspfad angeordneten Absolutdrucksensors besteht eine größere Wahrscheinlichkeit von Fehlmessungen, insbesondere einem Nichterkennen einer Messabweichung, als bei einem Abgleich der ersten Drucksignale des Absolutdrucksensors mit den Drucksignalen wenigstens eines zweiten Absolutdrucksensors.

Vorteilhafte Weiterbildungen der Erfindung sind in den Unteransprüchen angegeben.

Bevorzugt ist vorgesehen, dass jede der Ventileinrichtungen der Ventilanordnung einen dritten Absolutdrucksensor umfasst.

Zweckmäßig ist es, wenn der erste Absolutdrucksensor im Ventilraum oder im Ausgangskanal angeordnet ist, um ein von einer Arbeitsstellung des Ventilglieds abhängiges erstes Drucksignal an die Auswerteschaltung bereitzustellen. Bei einer Anordnung des ersten Absolutdrucksensors im Ventilraum kann dieser in Abhängigkeit von der mechanischen Ausgestaltung der Ventileinrichtung entweder den stets im Ventilraum herrschenden Versorgungsdruck, der durch den Eingangskanal zur Verfügung gestellt wird, oder einen im Ausgangskanal herrschenden Ausgangsdruck messen. Jedenfalls kann bei einer Bewegung des Ventilglieds aus der Sperrstellung in die Freigabestellung entweder ein Druckabfall oder ein Druckanstieg durch den ersten Absolutdrucksensor ermittelt werden. Dies ist davon abhängig, ob ein Ventilsitz, an dem das Ventilglied in der Sperrstellung abdichtend zur Anlage kommen kann, stromauf oder stromab des Ventilraums und des darin aufgenommenen ersten Absolutdrucksensors angeordnet ist. Bei einer Anordnung des ersten Absolutdrucksensors im Ausgangskanal ist der erste Absolutdrucksensor grundsätzlich stromab des Ventilsitzes angeordnet, mit dem das Ventilglied in der Sperrstellung eine abdichtende Verbindung eingeht und ermöglicht dadurch in der Sperrstellung des Ventilglieds eine Ermittlung des im Arbeitskanal und somit im Wesentlichen an einem am Arbeitskanal angeschlossenen Verbraucher anliegenden Arbeitsdrucks. Bevorzugt ist der zweite Absolutdrucksensor an einer Außenoberfläche eines Gehäuses der Ventilanordnung angeordnet, um ein von einem Umgebungsdruck abhängiges zweites Drucksignal an die Auswerteschaltung bereitzustellen. Somit kann mit Hilfe des zweiten Absolutdrucksensors ein Differenzdruck zwischen dem im Strömungspfad herrschenden Arbeitsdruck und dem als Referenzdruck ermittelten Umgebungsdruck berechnet werden, wodurch beispielsweise ein Bewegungsverhalten eines von der Ventileinrichtung mit Druck beaufschlagten, fluidversorgten Aktors oder eine Saugkraft eines von der Ventileinrichtung mit Unterdruck versorgten Sauggreifers überprüft werden kann. Ergänzend oder alternativ kann durch die Ermittlung des Differenzdrucks zwischen dem ersten und dem zweiten Drucksignal bei geeigneter Arbeitsstellung des Ventilglieds ein unmittelbarer Vergleich von Drucksignalen des ersten und zweiten Absolutdrucksensors ermöglicht werden, um in einem nachgelagerten Schritt beispielsweise eine Korrektur der vom ersten Absolutdrucksensor ermittelten Drucksignale zu ermöglichen.

Bei einer Weiterbildung der Erfindung ist vorgesehen, dass der erste Absolutdrucksensor im Ausgangskanal angeordnet ist und ein dritter Absolutdrucksensor im Eingangskanal angeordnet ist, um ein von einem Eingangsdruck im Eingangskanal oder von einem Arbeitsdruck im Ventilraum abhängiges drittes Drucksignal an die Auswerteschaltung bereitzustellen. Der dritte Absolutdrucksensor hat wie auch der zweite Absolutdrucksensor die Aufgabe, Drucksignale zur Verfügung zu stellen, die eine Überprüfung der Drucksignale des ersten Absolutdrucksensors ermöglichen. Bei geeigneter Gestaltung der Ventileinrichtung kann beispielsweise davon ausgegangen werden, dass der erste und der dritte Absolutdrucksensor bei einer Bewegung des Ventilglieds in die Freigabestellung die gleichen Drucksignale an die Auswerteschaltung bereitstellen. Dementsprechend kann bei Kenntnis über die Arbeitsstellung des Ventilglieds eine Überprüfung des ersten Absolutdrucksensors mit den Drucksignalen des dritten Absolutdrucksensors vorgenommen werden. Ergänzend oder alternativ können die dritten Drucksignale noch mit den zweiten Drucksignalen des zweiten Absolutdrucksensors abgeglichen werden, um auch darüber eine Überprüfung, in diesem Falle des dritten Absolutdrucksensors, zu ermöglichen. Dementsprechend kann die Auswerteschaltung für einen Abgleich des ersten und des zweiten Absolutdrucksensors oder des ersten und des dritten Absolutdrucksensors oder des ersten und zweiten und dritten Absolutdrucksensors in Abhängigkeit von einer Arbeitsstellung des Ventilglieds ausgebildet sein.

Bei einer vorteilhaften Weiterbildung der Erfindung ist vorgesehen, dass der erste Absolutdrucksensor und/oder der zweite Absolutdrucksensor und/oder die Auswerteschaltung Analog-Digitalwandlermittel für eine Digitalisierung von Messsignalen, insbesondere von Drucksignalen und/oder Temperatursignalen, und/oder eine Speichereinrichtung für eine Speicherung von Messsignalwerten, insbesondere von Drucksignalwerten und/oder Temperatursignalwerten, oder von Messsignalwerten und den Messsignalwerten zugeordneten Zeitstempeln aufweist. Mit Hilfe der Analog-Digitalwandlermittel können die typischerweise analogen, insbesondere in Form einer elektrischen Spannung oder eines elektrischen Stroms bereitgestellten Messsignale, beispielsweise Drucksignale und/oder Temperatursignale für eine digitale Weiterverarbeitung aufbereitet werden. Dies ist insbesondere dann von Interesse, wenn einzelne oder sämtliche Messsignale in regelmäßigen oder unregelmäßigen Zeitabständen in einer Speichereinrichtung gespeichert werden sollen, um beispielsweise eine langfristige Veränderung von Drucksignalen der einzelnen Absolutdrucksensoren beobachten zu können und gegebenenfalls entsprechende Fehlermeldungen ausgeben zu können. Zu diesem Zweck kann es besonders vorteilhaft sein, wenn einzelne oder sämtliche Messsignalwerte, insbesondere Drucksignalwerte, mit Zeitstempeln, also Zeitinformationen hinsichtlich der jeweiligen Ermittlung des entsprechenden Messsignalwerts, insbesondere Drucksignalwerts, in der Speichereinrichtung abgelegt werden. Die Verwendung von Zeitstempeln für die Drucksignalwerte ist insbesondere dann von Interesse, wenn eine Speicherung der Drucksignalwerte in unregelmäßigen Zeitabständen oder lediglich in Abhängigkeit von vorgebbaren Arbeitsstellungen des Ventilglieds oder anderen äußeren Umständen vorgenommen wird.

In weiterer Ausgestaltung der Erfindung ist vorgesehen, dass der erste Absolutdrucksensor einen Messbereich aufweist, der ein Zwei- bis Fünffaches eines Messbereichs des zweiten Absolutdrucksensors umfasst. Typischerweise ist der zweite Absolutdrucksensor dazu vorgesehen, einen Umgebungsdruck in der Umgebung der Ventileinrichtung zu ermitteln und es wird ferner davon ausgegangen, dass dieser Umgebungsdruck in einem engen Intervall, beispielsweise in einem Bereich von 1 bar +/- 200 Millibar schwankt, so dass ein Messbereich von beispielsweise 0 bis 2 bar für den zweiten Absolutdrucksensor ausreichend ist, sofern die Ventileinrichtung mit darin enthaltenen Absolutdrucksensoren nicht in einem Vakuum- oder Hochdruckbereich eingesetzt wird. Der erste Absolutdrucksensor wird beispielsweise für pneumatische Anwendungen einen Messbereich von typischerweise 0 bis 10 bar aufweisen, so dass der üblicherweise in pneumatischen Anlagen vorgesehene Überdruck von 6 bar ohne Probleme gemessen werden kann.

Vorteilhaft ist es, wenn der erste Absolutdrucksensor und/oder der zweite Absolutdrucksensor eine interne Vakuumkammer umfasst, die abschnittsweise von einer Messmembran verschlossen ist, wobei auf der Messmembran ein Deformationssensor oder ein Deformationssensor und ein Temperatursensor angeordnet sind, um eine druckabhängige oder eine druck- und temperaturabhängige Deformation der Messmembran zu ermitteln und daraus wenigstens ein, insbesondere temperaturkompensiertes, Drucksignal zu erzeugen. Ein derartiger Absolutdrucksensor kann beispielsweise mit den Methoden der Halbleiterherstellung und/oder den MEMS-Verfahren (Herstellungsverfahren für sogenannte "micro-electro-mechanical systems") kostengünstig für hochgenaue und schnelle Druckmessungen produziert werden und weist insbesondere eine Messmembran auf, auf der ein piezo-resistiver Sensor aufgebracht ist. Ferner kann an der Messmembran oder in unmittelbarer Umgebung der Messmembran ein Temperatursensor ausgebildet sein, der für die Temperaturkompensation des von der Messmembran ermittelten Drucksignals genutzt wird.

Die Aufgabe der Erfindung wird gemäß einem zweiten Aspekt durch ein Verfahren zum Kalibrieren einer Ventilanordnung nach Anspruch 13 gelöst.

Eine vorteilhafte Ausführungsform der Erfindung ist in der Zeichnung dargestellt. Hierbei zeigt:
Figur 1: eine Ventilanordnung mit mehreren Ventileinrichtungen sowie mehreren Absolutdrucksensoren und
Figur 2: eine schematische Schnittdarstellung einer Ventileinrichtung.

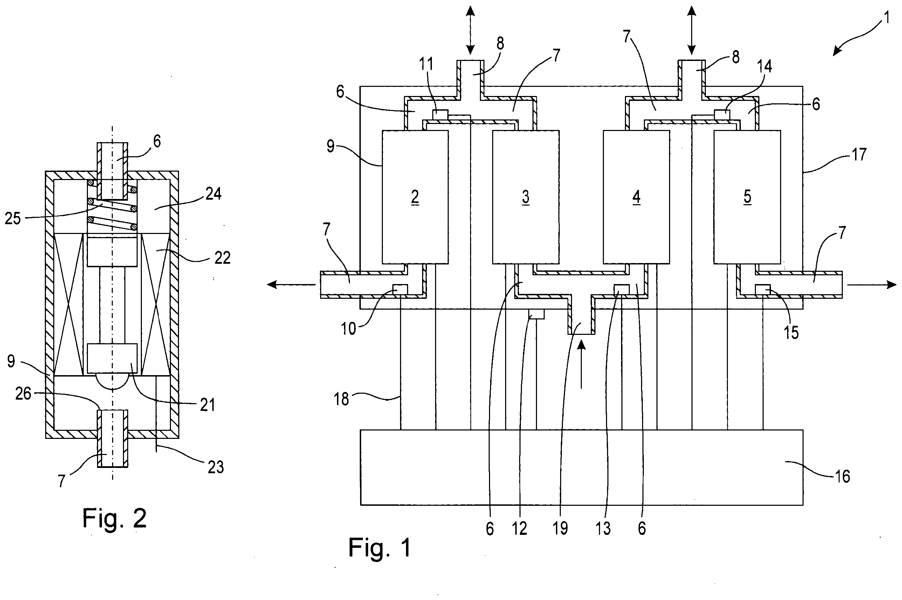

Eine in der Figur 1 dargestellte Ventilanordnung 1 umfasst exemplarisch vier Ventileinrichtungen 2 bis 5, die exemplarisch in einer fluidischen Brückenschaltung miteinander verbunden sind. Jede der Ventileinrichtungen 2 bis 5 weist gemäß der Darstellung in den Figuren 1 und 2 einen Eingangskanal 6 sowie einen Ausgangskanal 7 auf. Dabei sind die Eingangskanäle 6 der in der Figur 1 dargestellten Ventileinrichtungen 3 und 4 gemeinsam für einen Anschluss an eine nicht dargestellte Fluidquelle, insbesondere eine Druckluftquelle, vorgesehen. Ferner sind die Ausgangskanäle 7 der Ventileinrichtungen 2 und 5 jeweils als Fluidauslässe ausgebildet, die ein Abströmen von druckbeaufschlagtem Fluid in die Umgebung, insbesondere unter Zwischenschaltung eines nicht dargestellten Schalldämpfers, ermöglichen. Der Ausgangskanal 7 der Ventileinrichtung 3 ist mit dem Eingangskanal 6 der Ventileinrichtung 2 fluidisch kommunizierend verbunden und steht zusätzlich mit einem Arbeitsanschluss 8 in Verbindung, der für eine fluidische Ver- und Entsorgung eines nicht dargestellten Fluidverbrauchers vorgesehen ist. In gleicher Weise gilt dies für die Ventileinrichtungen 4 und 5.

Exemplarisch sind in der Ventilanordnung 1 mehrere Absolutdrucksensoren 10 bis 15 vorgesehen, die jeweils mit einer Auswerteschaltung 16 verbunden sind. Exemplarisch sind hierzu elektrische Verbindungen zwischen den Absolutdrucksensoren 10 bis 15 und der Auswerteschaltung 16 ausgebildet. Bei einer nicht dargestellten Ausführungsform sind zumindest einige der Verbindungen zwischen den Absolutdrucksensoren und der Auswerteschaltung kontaktlos, insbesondere optisch oder induktiv, ausgebildet.

Die Absolutdrucksensoren 10, 11, 14 und 15 sind jeweils in den Ausgangskanälen 7 der jeweiligen Ventileinrichtungen 2 bis 5 angeordnet und somit entsprechend der Definition in den Patentansprüchen als erste Absolutdrucksensoren anzusehen. Der Absolutdrucksensor 12 ist für die Ermittlung eines Umgebungsdrucks an einer Außenoberfläche eines schematisch dargestellten Ventilgehäuses 17 angeordnet und somit als zweiter Absolutdrucksensor gemäß den Ansprüchen anzusehen. Der im Eingangskanal 6 der Ventileinrichtung 4 angeordnete Absolutdrucksensor 13 ist dementsprechend als dritter Absolutdrucksensor zu kategorisieren.

Die in Figur 2 schematisch dargestellte Ventileinrichtung 2 umfasst exemplarisch ein Ventilgehäuse 9, das einen Ventilraum 24 begrenzt, in den der Eingangskanal 6 einmündet und aus dem der Ausgangskanal 7 ausmündet, so dass ein Strömungspfad durch die Ventileinrichtung den Eingangskanal 6, den Ventilraum 24 und den Ausgangskanal 7 umfasst. Im Ventilraum sind ein beispielhaft als elektrisch betreibbare Magnetspule ausgebildeter Antrieb 22 sowie ein vom Antrieb 22 antreibbares, exemplarisch mit einer Permanentmagnetanordnung ausgestattetes Ventilglied 21 angeordnet. Ferner ist im Ventilraum eine beispielhaft als Wendelfeder ausgebildete Federeinrichtung 25 angeordnet, die als vorgespannte Druckfeder zwischen dem Ventilglied 21 und dem Ventilgehäuse 9 zur Ausübung einer Schließkraft auf das Ventilglied 21 vorgesehen ist. An einem der Federeinrichtung 25 abgewandten Endbereich ist das Ventilglied 21 auf eine Geometrie eines exemplarisch am Ausgangskanal 7 ausgebildeten Ventilsitzes 26 derart angepasst, dass der Strömungspfad bei Anlage des Ventilglieds 21 am Ventilsitz 26 blockiert ist. Bei Beaufschlagung des Antriebs 22 mittels einer Anschlussleitung 23 mit elektrischen Strom wird eine magnetische Krafteinwirkung auf das Ventilglied 21 aus-geübt, dass dieses entgegen der Vorspannung der Federeinrichtung 25 vom Ventilsitz 26 abgehoben wird und somit den Strömungspfad zwischen dem Eingangskanal 6 und dem Ausgangskanal 7 freigibt.

Die vorstehende Beschreibung der Aufbauweise der Ventileinrichtung 2 ist nur rein exemplarisch, sowohl die Art des Antriebs als auch die Gestaltung und Beweglichkeit des Ventilglieds können in anderer Weise ausgebildet sein, wie dies beispielsweise bei einem Piezoventil oder einem fluidisch vorgesteuerten Ventil der Fall ist.

Nachstehend soll exemplarisch beschrieben werden, in welcher Weise die Drucksignale der ersten, zweiten und dritten Absolutdrucksensoren von der Auswerteschaltung 16 beispielsweise dazu genutzt werden können, die Funktion der ersten Absolutdrucksensoren 10, 11, 14, 15 zu überprüfen beziehungsweise Korrekturmaßnahmen einzuleiten. Für die nachfolgende Beschreibung wird davon ausgegangen, dass die Ventileinrichtungen 2 bis 5 als normal geschlossene (NC - Normal Closed) ausgebildete Ventile vorgesehen sind und erst durch Ansteuerung mittels der Steuerleitungen 18, die von der Auswerteschaltung 16 mit Stellenergie, insbesondere elektrischer Energie, beaufschlagt werden können, aus einer geschlossenen in eine geöffnete Arbeitsstellung überführt werden.

Ohne eine entsprechende Ansteuerung der Ventileinrichtungen 2 bis 5 liegt ein am Eingangskanal der Ventileinrichtungen 3 und 4, der auch als Versorgungsanschluss 19 bezeichnet werden kann, angelegter fluidischer Druck lediglich in diesen beiden Eingangskanälen 6 vor und wird von dem Absolutdrucksensor 13 gemessen und an die Auswerteschaltung 16 übermittelt. An den Absolutdrucksensoren 10 und 15 liegt der Umgebungsdruck an, der auch vom Absolutdrucksensor 12 ermittelt werden kann. Die Absolutdrucksensoren 11 und 14 sind jeweils mit einem an den entsprechenden Arbeitsanschlüssen 8 herrschenden Arbeitsdruck beaufschlagt, der von den Eigenschaften der jeweils dort angeschlossenen, nicht näher dargestellten Fluidverbraucher abhängig ist. Somit kann zu diesem ersten Zeitpunkt lediglich eine Überprüfung der beiden Absolutdrucksensoren 10 und 15 durch Abgleich ihrer Drucksignale mit den Drucksignalen des Absolutdrucksensors 12 vorgenommen werden.

Zu einem zweiten Zeitpunkt, zu dem beispielsweise eine Ansteuerung der Ventileinrichtung 3 erfolgt, kann das am Versorgungsanschluss 19 angelegte druckbeaufschlagte Fluid durch die Ventileinrichtung 3 und den Ausgangskanal 7 der Ventileinrichtung 3 bis zum zugeordneten Arbeitsanschluss 8 strömen, dabei stellen sich im Eingangskanal 6 der Ventileinrichtung 3 und im Ausgangskanal 7 der Ventileinrichtungen 3 die gleichen Druckverhältnisse ein, so dass die Auswerteschaltung 16 überprüfen kann, ob das Drucksignal des dritten Absolutdrucksensors 13 identisch mit dem Drucksignal des ersten Absolutdrucksensors 11 ist. Bei Abweichungen zwischen den beiden Drucksignalen, die einen vorgebbaren Schwellwerts überschreiten kann entweder eine Fehlermeldung ausgeben oder es kann eine Korrektur des vom ersten Absolutdrucksensors 11 ausgegebenen Drucksignals vorgenommen werden, so dass nach Durchführung dieser Korrektur für beide Absolutdrucksensoren 11 und 13 das gleiche Drucksignal vorliegt. Diese Korrektur fußt auf der Annahme, dass der Absolutdrucksensor 13 mit höherer Wahrscheinlichkeit ein korrektes Drucksignal ausgibt als der Absolutdrucksensor 11, da der Absolutdrucksensor 13 verglichen mit dem Absolutdrucksensor 11 geringeren Bandbreite an unterschiedlichen Drücken ausgesetzt ist, da der Absolutdrucksensor 13 entweder mit dem im Wesentlichen konstanten Versorgungsdruck oder mit einem niedrigeren, sich bei Ventilöffnung einstellenden Arbeitsdruck beaufschlagt ist. Demgegenüber sind der Absolutdrucksensor 11 und in gleicher Weise auch der Absolutdrucksensor 14 je nach Ausgestaltung des am entsprechenden Arbeitsanschluss angeschlossenen Fluidverbrauchers einer Vielzahl von Druckwechselspielen und einer hohen Bandbreite von Druckschwankungen ausgesetzt und somit mit höherer Wahrscheinlichkeit ausfallgefährdet, als dies für den Absolutdrucksensor 13 der Fall ist.

Nach Schließen der Ventileinrichtung 3 kann zu einem dritten Zeitpunkt ein Öffnen der Ventileinrichtung 2 vorgesehen werden, wodurch ein Druckausgleich zwischen dem Arbeitsanschluss 8 der Ventileinrichtungen 2 und 3 und dem Ausgangskanal 7 der Ventileinrichtung 2 vorliegt, so dass die Drucksignale der in diesem Strömungspfad vorgesehenen Absolutdrucksensoren 10 und 11 von der Auswerteschaltung 16 miteinander verglichen werden können und gegebenenfalls eine Korrektur des vom Absolutdrucksensor 11 bereitgestellten Drucksignals vorgenommen werden kann.

Exemplarisch kann vorgesehen sein, dass die von den Absolutdrucksensoren 10 bis 15 ermittelten analogen Drucksignale unmittelbar in den jeweiligen Absolutdrucksensoren 10 bis 15 digital gewandelt werden und als digitale Signale an die Auswerteschaltung 16 übertragen werden. Ergänzend oder alternativ kann vorgesehen sein, dass die jeweiligen Drucksignale in Speichereinrichtungen, die in den jeweiligen Absolutdrucksensoren 10 bis 15 enthalten sind, zwischengespeichert werden oder für Kalibrationszwecke mit Zeitstempeln versehen auch längere Zeit in den entsprechenden Speichereinrichtungen gehalten werden. Zusätzlich oder alternativ können auch in der Auswerteschaltung 16 Drucksignale der jeweiligen Absolutdrucksensoren 10 bis 15 gespeichert werden. Ferner findet in der Auswerteschaltung 16 der vorstehend beschriebene Abgleich von Drucksignalen unterschiedlicher Absolutdrucksensoren 10 bis 15 bei unterschiedlichen Schaltzuständen der Ventileinrichtungen 2 bis 5 statt, wobei stets im Vordergrund steht, Drucksignale verschiedener Absolutdrucksensoren 10 bis 15 zu Zeitpunkten zu vergleichen, an denen davon ausgegangen werden kann, dass die zu vergleichenden Absolutdrucksensoren 10 bis 15 mit dem gleichen Arbeitsdruck beaufschlagt sind. Je nach Ausgestaltung der Auswerteschaltung 16 und/oder der Absolutdrucksensoren 10 bis 15 können Korrekturwerte, die anhand von Abgleichen unterschiedlicher Absolutdrucksensoren 10 bis 15 ermittelt wurden, in entsprechenden Speichereinrichtungen in der Auswerteschaltung 16 und/oder in den Absolutdrucksensoren 10 bis 15 gespeichert werden.

## Patentansprüche

1. Ventilanordnung mit mehreren Ventileinrichtungen (2, 3, 4, 5), wobei jede der Ventileinrichtungen (2, 3, 4, 5) ein Ventilgehäuse (9) aufweist, das einen Ventilraum (24) begrenzt, in dem ein Ventilglied (21) beweglich zwischen einer Sperrstellung und einer Freigabestellung aufgenommen ist, um einen freien Strömungsquerschnitt für ein Fluid in einem Strömungspfad zwischen einem in den Ventilraum einmündenden Eingangskanal (6) und einem aus dem Ventilraum ausmündenden Ausgangskanal (7) zu beeinflussen, und wobei jede der Ventileinrichtungen (2, 3, 4, 5) einen ersten Absolutdrucksensor (10, 11, 14, 15) zur Bereitstellung eines ersten Drucksignals in Abhängigkeit von einem Arbeitsdruck im Strömungspfad aufweist, sowie mit einer Auswerteschaltung (16) zur Verarbeitung des ersten Drucksignals und mit einem zweiten Absolutdrucksensor (12), der außerhalb der Strömungspfade der Ventilanordnung angeordnet ist und der zur Bereitstellung eines zweiten Drucksignals in Abhängigkeit von einem Referenzdruck außerhalb der Strömungspfade der Ventilanordnung ausgebildet ist und der mit der Auswerteschaltung (16) verbunden ist, um eine Ermittlung eines Differenzdrucks zwischen dem ersten und dem zweiten Drucksignal zu ermöglichen, wobei der zweite Absolutdrucksensor ein gemeinsamer Absolutdrucksensor ist, der mehreren Ventileinrichtungen zugeordnet ist.

2. Ventilanordnung nach Anspruch 1, **dadurch gekennzeichnet, dass** jede der Ventileinrichtungen (2, 3, 4, 5) einen dritten Absolutdrucksensor (10, 11, 13, 14, 15) umfasst.

3. Ventilanordnung nach Anspruch 1 oder 2, **dadurch gekennzeichnet, dass** der erste Absolutdrucksensor (10, 11, 14, 15) im Ventilraum (24) oder im Ausgangskanal (7) angeordnet ist, um ein von einer Schaltstellung des Ventilglieds (21) abhängiges erstes Drucksignal an die Auswerteschaltung (16) bereitzustellen.

4. Ventilanordnung nach Anspruch 1, 2 oder 3, **dadurch gekennzeichnet, dass** der zweite Absolutdrucksensor (12) an einer Außenoberfläche eines Gehäuses (17) der Ventilanordnung angeordnet ist, um ein von einem Umgebungsdruck abhängiges zweites Drucksignal an die Auswerteschaltung (16) bereitzustellen.

5. Ventilanordnung nach Anspruch 2,
**dadurch gekennzeichnet,**
**dass** der erste Absolutdrucksensor (10, 11, 14, 15) im Ausgangskanal (7) angeordnet ist und der dritte Absolutdrucksensor (13) im Eingangskanal (6) oder im Ventilraum (24) angeordnet ist, um ein von einem Eingangsdruck im Eingangskanal (6) oder von einem Arbeitsdruck im Ventilraum abhängiges drittes Drucksignal an die Auswerteschaltung (16) bereitzustellen.

6. Ventilanordnung nach einem der vorhergehenden Ansprüche, **dadurch gekennzeichnet, dass** die Auswerteschaltung (16) für einen Abgleich des ersten und des zweiten Absolutdrucksensors (10, 11, 12, 14, 15) ausgebildet ist.

7. Ventilanordnung nach Anspruch 2 oder 5, **dadurch gekennzeichnet, dass** die Auswerteschaltung (16) für einen Abgleich des ersten und des dritten Absolutdrucksensors (10, 11, 13, 14, 15) oder des ersten und zweiten und dritten Absolutdrucksensors (10, 11, 12, 13, 14, 15) in Abhängigkeit von einer Arbeitsstellung des Ventilglieds (21) ausgebildet ist.

8. Ventilanordnung nach einem der vorhergehenden Ansprüche, **dadurch gekennzeichnet, dass** der erste Absolutdrucksensor (10, 11, 14, 15) und/oder der zweite Absolutdrucksensor (12) und/oder die Auswerteschaltung (16) Analog-Digitalwandlermittel für eine Digitalisierung von Messsignalen, insbesondere Drucksignalen und/oder Temperatursignalen, und/oder eine Speichereinrichtung für eine Speicherung von Messsignalwerten, insbesondere von Drucksignalwerten und/oder Temperatursignalwerten oder von Messsignalwerten und den Messsignalwerten zugeordneten Zeitstempeln aufweisen.

9. Ventilanordnung nach Anspruch 2, 5 oder 7, **dadurch gekennzeichnet, dass** der erste Absolutdrucksensor (10, 11, 14, 15) und/oder der zweite Absolutdrucksensor (12) und/oder der dritte Absolutdrucksensor (13) und/oder die Auswerteschaltung (16) Analog-Digitalwandlermittel für eine Digitalisierung von Messsignalen, insbesondere Drucksignalen und/oder Temperatursignalen, und/oder eine Speichereinrichtung für eine Speicherung von Messsignalwerten, insbesondere von Drucksignalwerten und/oder Temperatursignalwerten oder von Messsignalwerten und den Messsignalwerten zugeordneten Zeitstempeln aufweisen.

10. Ventilanordnung nach einem der vorhergehenden Ansprüche, **dadurch gekennzeichnet, dass** der erste Absolutdrucksensor (10, 11, 14, 15) einen Messbereich aufweist, der ein zumindest Zwei- bis Fünffaches eines Messbereichs des zweiten Absolutdrucksensors (12) umfasst.

11. Ventilanordnung nach einem der vorhergehenden Ansprüche, **dadurch gekennzeichnet, dass** der erste Absolutdrucksensor (10, 11 14, 15) und/oder der zweite Absolutdrucksensor (12) eine interne Vakuumkammer umfasst, die abschnittsweise von einer Messmembran verschlossen ist, wobei auf der Messmembran ein Deformationssensor oder ein Deformationssensor und ein Temperatursensor angeordnet sind, um eine druckabhängige oder eine druck- und temperaturabhängige Deformation der Messmembran zu ermitteln und daraus wenigstens ein Drucksignal, insbesondere ein temperaturkompensiertes Drucksignal, zu erzeugen.

12. Ventilanordnung nach Anspruch 2, 5, 7 oder 9, **dadurch gekennzeichnet, dass** der erste Absolutdrucksensor (10, 11 14, 15) und/oder der zweite Absolutdrucksensor (12) und/oder der dritte Absolutdrucksensor (13) eine interne Vakuumkammer umfasst, die abschnittsweise von einer Messmembran verschlossen ist, wobei auf der Messmembran ein Deformationssensor oder ein Deformationssensor und ein Temperatursensor angeordnet sind, um eine druckabhängige oder eine druck- und temperaturabhängige Deformation der Messmembran zu ermitteln und daraus wenigstens ein Drucksignal, insbesondere ein temperaturkompensiertes Drucksignal, zu erzeugen.

13. Verfahren zum Kalibrieren einer Ventilanordnung (1) nach einem der Ansprüche 2, 5, 7, 9 oder 12, bei dem wenigstens zwei Druckwerte aus der Gruppe: Umgebungsdruck, ermittelt aus dem zweiten Drucksignal des zweiten Absolutdrucksensors (12); erster Arbeitsdruck, ermittelt im Strömungspfad zwischen dem Eingangskanal (6) und dem Ausgangskanal (7) mittels des ersten Drucksignals des ersten Absolutdrucksensors (10, 11, 14, 15) bei einer ersten vorgebbaren Arbeitsstellung des Ventilglieds; zweiter Arbeitsdruck, ermittelt im Strömungspfad zwischen dem Eingangskanal (6) und dem Ausgangskanal (7) mittels des ersten Drucksignals des ersten Absolutdrucksensors (10, 11, 14, 15) bei einer zweiten vorgebbaren Arbeitsstellung des Ventilglieds (21), die von der ersten Arbeitsstellung des Ventilglieds (21) abweicht; dritter Arbeitsdruck, ermittelt im Strömungspfad zwischen dem Eingangskanal (6) und dem Ausgangskanal (7) mittels des dritten Drucksignals des dritten Absolutdrucksensors (13) bei einer ersten vorgebbaren Arbeitsstellung des Ventilglieds; vierter Arbeitsdruck, ermittelt im Strömungspfad zwischen dem Eingangskanal (6) und dem Ausgangskanal (7) mittels des dritten Drucksignals des dritten Absolutdrucksensors (13) bei einer zweiten vorgebbaren Arbeitsstellung des Ventilglieds, die von der ersten Arbeitsstellung des Ventilglieds abweicht; ermittelt werden und anschließend eine Ermittlung eines Korrekturwerts für den ersten Absolutdrucksensor (10, 11, 14, 15) anhand der ermittelten Druckdifferenzen zwischen dem Umgebungsdruck und dem ersten Arbeitsdruck und/oder zwischen dem Umgebungsdruck und dem zweiten Arbeitsdruck und/oder zwischen dem ersten Arbeitsdruck und dem dritten Arbeitsdruck und/oder zwischen dem zweiten Arbeitsdruck und dem vierten Arbeitsdruck; und/oder Ermittlung eines Korrekturwerts für den dritten Absolutdrucksensor(13) anhand der ermittelten Druckdifferenzen zwischen dem Umgebungsdruck und dem dritten Arbeitsdruck und/oder zwischen dem Umgebungsdruck und dem vierten Arbeitsdruck und/oder zwischen dem ersten Arbeitsdruck und dem dritten Arbeitsdruck und/oder zwischen dem zweiten Arbeitsdruck und dem vierten Arbeitsdruck; in der Auswerteschaltung (16) erfolgt.

## Claims

1. Valve arrangement with a plurality of valve devices (2, 3, 4, 5), each valve device (2, 3, 4, 5) comprising a valve housing (9) which bounds a valve chamber (24) in which a valve member (21) is accommodated for movement between a blocking position and a release position in order to influence a free flow crosssection for a fluid in a flow path between an inlet passage (6) terminating into the valve chamber and an outlet passage (7) leading from the valve chamber, wherein each of the valve devices (2, 3, 4, 5) further comprises a first absolute pressure sensor (10, 11, 14, 15) for providing a first pressure signal as a function of an operating pressure in the flow path, the valve arrangement comprising an evaluation circuit (16) for processing the first pressure signal and further comprising a second absolute pressure sensor (12) which is located outside the flow paths of the valve arrangement to provide a second pressure signal as a function of a reference pressure outside the flow paths and which is connected to the evaluation circuit (16) for enabling a determination of a differential pressure between the first and second pressure signals, wherein the second absolute pressure sensor (12) is a common pressure sensor which is related with several of valve devices.

2. Valve arrangement according to claim 1, **characterised in that** each of the valve devices (2, 3, 4, 5) comprises a third absolute pressure sensor (10, 11, 13, 14, 15).

3. Valve arrangement according to claim 1 or 2, **characterised in that** the first absolute pressure sensor (10, 11, 14, 15) is located in the valve chamber (24) or in the outlet passage (7) to provide a first pressure signal depending on an operating position of the valve member (21) to the evaluation circuit (16).

4. Valve arrangement according to claim 1, 2 or 3, **characterised in that** the second absolute pressure sensor (12) is located on an outer surface of a housing (17) of the valve arrangement to provide a second pressure signal to the evaluation circuit (16) which is dependent on ambient pressure.

5. Valve arrangement according to claim 2, **characterised in that** the first absolute pressure sensor (10, 11, 14, 15) is located in the outlet passage (7) and the third absolute pressure sensor (13) is located in the inlet passage (6) or in the valve chamber (24), in order to provide a third pressure signal to the evaluation circuit (16) which is dependent from an inlet pressure in the inlet passage (6) or from an operating pressure in the valve chamber.

6. Valve arrangement according to any of the preceding claims, **characterised in that** the evaluation circuit (16) is designed for an adjustment of the first and the second absolute pressure sensor (10, 11, 12, 14, 15)

7. Valve arrangement according to claim 2 or 5, **characterised in that** the evaluation circuit (16) is designed for an adjustment of the first and the third absolute pressure sensor (10, 11, 13, 14, 15) or the first, the second and the third absolute pressure sensor (10, 11, 12, 13, 14, 15) as a function of an operating position of the valve member (21).

8. Valve arrangement according to any of the preceding claims, **characterised in that** the first absolute pressure sensor (10, 11, 14, 15) and/or the second absolute pressure sensor (12) and/or the evaluation circuit (16) comprise(s) analogue-to-digital converter means for a digital conversion of measuring signals, in particular pressure signals and/or temperature signals, and/or a memory device for storing measuring signal values, in particular pressure signal values and/or temperature signal values, or of measuring signal values and time stamps assigned to the measuring signal values.

9. Valve arrangement according to claim 2, 5 or 7, **characterised in that** the first absolute pressure sensor (10, 11, 14, 15) and/or the second absolute pressure sensor (12) and/or the third absolute pressure sensor (13) and/or the evaluation circuit (16) comprise(s) analogue-to-digital converter means for an digital conversion of measuring signals, in particular pressure signals and/or temperature signals, and/or a memory device for storing measuring signal values, in particular pressure signal values and/or temperature signal values, or of measuring signal values and time stamps assigned to the measuring signal values.

10. Valve arrangement according to any of the preceding claims, **characterised in that** the first absolute pressure sensor (10, 11, 14, 15) has a measuring range which is at least two to five times as large as a measuring range of the second absolute pressure sensor (12).

11. Valve arrangement according to any of the preceding claims, **characterised in that** the first absolute pressure sensor (10, 11, 14, 15) and/or the second absolute pressure sensor (12) includes an internal vacuum chamber which is partially closed by a measuring diaphragm, with a deformation sensor or a deformation sensor and a temperature sensor being provided on the measuring diaphragm for detecting a pressure-dependent or a pressure- and temperature-dependent deformation of the measuring diaphragm and for generating from this at least one, in particular a temperature-compensated, pressure signal.

12. Valve arrangement according claims 2, 5, 7 or 9, **characterised in that** the first absolute pressure sensor (10, 11, 14, 15) and/or the second absolute pressure sensor (12) and/or the third absolute pressure sensor (13) includes an internal vacuum chamber which is partially closed by a measuring diaphragm, with a deformation sensor or a deformation sensor and a temperature sensor being provided on the measuring diaphragm for detecting a pressure-dependent or a pressure- and temperature-dependent deformation of the measuring diaphragm and for generating from this at least one, in particular a temperature-compensated, pressure signal.

13. Method for calibrating a valve arrangement according to one of the claims 2, 5, 7, 9 or 12, in which in which at least two pressure values from the group: ambient pressure, determined from the second pressure signal of the second absolute pressure sensor (12); first operating pressure, determined in the flow path between the inlet passage (6) and the outlet passage (7) by means of the first pressure signal of the first absolute pressure sensor (10, 11, 14, 15) at a first presettable operating position of the valve member; second operating pressure, determined in the flow path between the inlet passage (6) and the outlet passage (7) by means of the first pressure signal of the first absolute pressure sensor (10, 11, 14, 15) at a second presettable operating position of the valve member (21) which differs from the first operating position of the valve member (21); third operating pressure, determined in the flow path between the inlet passage (6) and the outlet passage (7) by means of the third pressure signal of the third absolute pressure sensor (13) at a first presettable operating position of the valve member; fourth operating pressure, determined in the flow path between the inlet passage (6) and the outlet passage (7) by means of the third pressure signal of the third absolute pressure sensor (13) at a second presettable operating position of the valve member which differs from the first operating position of the valve member; are determined, followed by a determination of a correction value for the first absolute pressure sensor (10, 11, 14, 15) using the detected differential pressures between the ambient pressure and the first operating pressure and/or between the ambient pressure and the second operating pressure and/or between the first operating pressure and the third operating pressure and/or between the second operating pressure and the fourth operating pressure; and/or a determination of a correction value for the third absolute pressure sensor (13) using the detected differential pressures between the ambient pressure and the third operating pressure and/or between the ambient pressure and the fourth operating pressure and/or between the first operating pressure and the third operating pressure and/or between the second operating pressure and the fourth operating pressure; in the evaluation circuit.

## Revendications

1. Ensemble de soupapes avec plusieurs systèmes de soupape (2, 3, 4, 5), dans lequel chacun des systèmes de soupape (2, 3, 4, 5) présente un boîtier de soupape (9), qui délimite un espace de soupape (24), dans lequel est logé un organe de soupape (21) de manière mobile entre une position de blocage et une position de déblocage pour influencer une section transversale d'écoulement libre pour un fluide sur un trajet d'écoulement entre un canal d'entrée (6) débouchant dans l'espace de soupape et un canal de sortie (7) sortant de l'espace de soupape, et dans lequel chacun des systèmes de soupape (2, 3, 4, 5) présente un premier capteur de pression absolue (10, 11, 14, 15) pour fournir un premier signal de pression en fonction d'une pression de travail sur le trajet d'écoulement, ainsi qu'avec un circuit d'évaluation (16) pour traiter le premier signal de pression et avec un deuxième capteur de pression absolue (12), qui est disposé à l'extérieur des trajets d'écoulement de l'ensemble de soupapes et qui est réalisé pour fournir un deuxième signal de pression en fonction d'une pression de référence à l'extérieur des trajets d'écoulement de l'ensemble de soupapes et qui est relié au circuit d'évaluation (16) pour permettre une détermination d'une pression différentielle entre le premier et le deuxième signal de pression, dans lequel le deuxième capteur de pression absolue est un capteur de pression absolue commun, qui est associé à plusieurs systèmes de soupape.

2. Ensemble de soupapes selon la revendication 1, **caractérisé en ce que** chacun des systèmes de soupape (2, 3, 4, 5) comprend un troisième capteur de pression absolue (10, 11, 13, 14, 15).

3. Ensemble de soupapes selon la revendication 1 ou 2, **caractérisé en ce que** le premier capteur de pression absolue (10, 11, 14, 15) est disposé dans l'espace de soupape (24) ou dans le canal de sortie (7) pour fournir au circuit d'évaluation (16) un premier signal de pression dépendant d'une position de commutation de l'organe de soupape (21).

4. Ensemble de soupapes selon la revendication 1, 2 ou 3, **caractérisé en ce que** le deuxième capteur de pression absolue (12) est disposé sur une surface extérieure d'un boîtier (17) de l'ensemble de soupapes pour fournir au circuit d'évaluation (16) un deuxième signal de pression dépendant d'une pression environnante.

5. Ensemble de soupapes selon la revendication 2,
**caractérisé en ce**
**que** le premier capteur de pression absolue (10, 11, 14, 15) est disposé dans le canal de sortie (7) et le troisième capteur de pression absolue (13) est disposé dans le canal d'entrée (6) ou dans l'espace de soupape (24) pour fournir au circuit d'évaluation (16) un troisième signal de pression dépendant d'une pression d'entrée dans le canal d'entrée (6) ou d'une pression de travail dans l'espace de soupape.

6. Ensemble de soupapes selon l'une quelconque des revendications précédentes, **caractérisé en ce que** le circuit d'évaluation (16) est réalisé pour une compensation du premier et du deuxième capteur de pression absolue (10, 11, 12, 14, 15).

7. Ensemble de soupapes selon la revendication 2 ou 5, **caractérisé en ce que** le circuit d'évaluation (16) est réalisé pour une compensation du premier et du troisième capteur de pression absolue (10, 11, 13, 14, 15) ou du premier et du deuxième et du troisième capteur de pression absolue (10, 11, 12, 13, 14, 15) en fonction d'une position de travail de l'organe de soupape (21).

8. Ensemble de soupapes selon l'une quelconque des revendications précédentes, **caractérisé en ce que** le premier capteur de pression absolue (10, 11, 14, 15) et/ou le deuxième capteur de pression absolue (12) et/ou le circuit d'évaluation (16) présentent des moyens de conversion analogique-numérique pour une numérisation de signaux de mesure, en particulier de signaux de pression et/ou de signaux de température, et/ou un système de stockage pour un stockage de valeurs de signaux de mesure, en particulier de valeurs de signaux de pression et/ou de valeurs de signaux de température ou de valeurs de signaux de mesure et d'horodatages associés aux valeurs de signaux de mesure.

9. Ensemble de soupapes selon la revendication 2, 5 ou 7, **caractérisé en ce que** le premier capteur de pression absolue (10, 11, 14, 15) et/ou le deuxième capteur de pression absolue (12) et/ou le troisième capteur de pression absolue (13) et/ou le circuit d'évaluation (16) présentent des moyens de conversion analogique-numérique pour une numérisation de signaux de mesure, en particulier de signaux de pression et/ou de signaux de température, et/ou un système de stockage pour un stockage de valeurs de signaux de mesure, en particulier de valeurs de signaux de pression et/ou de valeurs de signaux de température ou de valeurs de signaux de mesure et d'horodatages associés aux valeurs de signaux de mesure.

10. Ensemble de soupapes selon l'une quelconque des revendications précédentes, **caractérisé en ce que** le premier capteur de pression absolue (10, 11, 14, 15) présente une plage de mesure, qui comprend au moins le double au quintuple d'une plage de mesure du deuxième capteur de pression absolue (12).

11. Ensemble de soupapes selon l'une quelconque des revendications précédentes, **caractérisé en ce que** le premier capteur de pression absolue (10, 11, 14, 15) et/ou le deuxième capteur de pression absolue (12) comprennent une chambre sous vide interne, qui est fermée par endroits par une membrane de mesure, dans lequel un capteur de déformation ou un capteur de déformation et un capteur de température sont disposés sur la membrane de mesure pour déterminer une déformation de la membrane de mesure dépendant de la pression ou une déformation de la membrane de mesure dépendant de la pression et de la température et pour générer sur cette base au moins un signal de pression, en particulier un signal de pression compensé en température.

12. Ensemble de soupapes selon la revendication 2, 5, 7 ou 9, **caractérisé en ce que** le premier capteur de pression absolue (10, 11, 14, 15) et/ou le deuxième capteur de pression absolue (12) et/ou le troisième capteur de pression absolue (13) comprennent une chambre sous vide interne, qui est fermée par endroits par une membrane de mesure, dans lequel un capteur de déformation ou un capteur de déformation et un capteur de température sont disposés sur la membrane de mesure pour déterminer une déformation de la membrane de mesure dépendant de la pression ou une déformation de la membrane de mesure dépendant de la pression et de la température et pour générer sur cette base au moins un signal de pression, en particulier un signal de pression compensé en température.

13. Procédé pour étalonner un ensemble de soupapes (1) selon l'une quelconque des revendications 2, 5, 7, 9 ou 12, où sont déterminées au moins deux valeurs de pression issues du groupe : pression environnante, déterminée à partir du deuxième signal de pression du deuxième capteur de pression absolue (12) ; première pression de travail déterminée sur le trajet d'écoulement entre le canal d'entrée (6) et le canal de sortie (7) au moyen du premier signal de pression du premier capteur de pression absolue (10, 11, 14, 15) dans une première position de travail pouvant être prédéfinie de l'organe de soupape ; une deuxième pression de travail déterminée sur le trajet d'écoulement entre le canal d'entrée (6) et le canal de sortie (7) au moyen du premier signal de pression du premier capteur de pression absolue (10, 11, 14, 15) dans une deuxième position de travail pouvant être prédéfinie de l'organe de soupape (21), qui diverge de la première position de travail de l'organe de soupape (21) ; une troisième pression de travail déterminée sur le trajet d'écoulement entre le canal d'entrée (6) et le canal de sortie (7) au moyen du troisième signal de pression du troisième capteur de pression absolue (13) dans une première position de travail pouvant être prédéfinie de l'organe de soupape ; une quatrième pression de travail déterminée sur le trajet d'écoulement entre le canal d'entrée (6) et le canal de sortie (7) au moyen du troisième signal de pression du troisième capteur de pression absolue (13) dans une deuxième position de travail pouvant être prédéfinie de l'organe de soupape, qui diverge de la première position de travail de l'organe de soupape, puis une détermination d'une valeur de correction est effectuée pour le premier capteur de pression absolue (10, 11, 14, 15) à l'aide des différences de pression déterminées entre la pression environnante et la première pression de travail et/ou entre la pression environnante et la deuxième pression de travail et/ou entre la première pression de travail et la troisième pression de travail et/ou entre la deuxième pression de travail et la quatrième pression de travail ; et/ou la détermination d'une valeur de correction est effectuée pour le troisième capteur de pression absolue (13) à l'aide des différences de pression déterminées entre la pression environnante et la troisième pression de travail et/ou entre la pression environnante et la quatrième pression de travail et/ou entre la première pression de travail et la troisième pression de travail et/ou entre la deuxième pression de travail et la quatrième pression de travail dans le circuit d'évaluation (16).
